**Europäisches Patentamt**

**European Patent Office**

**Office européen des brevets**

(19)

(11) Publication number : **0 259 497 B1**

## EUROPEAN PATENT SPECIFICATION

(12)

(45) Date of publication of patent specification :
**12.02.92 Bulletin 92/07**

(51) Int. Cl.⁵ : **B23H 7/10**

(21) Application number : **87901662.4**

(22) Date of filing : **03.03.87**

(86) International application number :
**PCT/JP87/00131**

(87) International publication number :
**WO 87/05242 11.09.87 Gazette 87/20**

(54) **POWER-FEEDING DEVICE FOR A WIRE-CUT ELECTRIC SPARK MACHINE.**

(30) Priority : **05.03.86 JP 49270/86**

(43) Date of publication of application :
**16.03.88 Bulletin 88/11**

(45) Publication of the grant of the patent :
**12.02.92 Bulletin 92/07**

(84) Designated Contracting States :
**CH DE FR GB LI**

(56) References cited :
**JP-A- 5 652 133**
**JP-A- 6 138 819**
**JP-A-59 182 024**

(56) References cited :
**PATENT ABSTRACTS OF JAPAN, vol. 9, no.**
**303 (M-434)[2026], 30th November 1985; &**
**JP-A-60 141 432 (INOUE-JAPAX KENKYUSHO**
**K.K.) 26-07-1985**

(73) Proprietor : **FANUC LTD.**
**3580, Shibokusa Aza-Komanba, Oshino-mura**
**Minamitsuru-gun, Yamanashi 401-05 (JP)**

(72) Inventor : **OBARA, Haruki**
**844-7, Hashimoto Sagamihara-shi**
**Kanagawa 229 (JP)**

(74) Representative : **Jackson, Peter Arthur et al**
**Gill Jennings & Every, 53-64 Chancery Lane**
**London WC2A 1HN (GB)**

## Description

This invention relates to an improvement applicable to an electric power feeder for a wire electrode type electrical discharge machining equipment. More specifically, this invention relates to an improvement applicable to an electric power feeder for a wire electrode type electrical discharge machining equipment, such an improvement having been developed for the purpose to allow arbitrary selection of any of the plural electrical power supply circuits each of which has impedance whose value is different from one another, such plural electrical power supply circuits being installed to allow a single electrical discharge machining equipment to realize optimum machining characteristics, corresponding, e.g., to any selected machining speed, required smoothness of the machined surface.

It is known that the machining speed is decreased for a wire electrode type electrical discharge machining, whenever it is conducted with a more inductive discharge circuit or with a discharge circuit which has a larger value of inductance. Thus, a coaxial cable or the like which has a relatively small value of inductance is preferably employed for the discharge circuit of an electrical discharge machining equipment which is employed for a rough machining or a preliminary machining. Incidentally, it is known that the smoothness of the machined surface is improved, whenever the amount of energy to be applied for each discharge of an electrical discharge machining, is smaller. Thus, a discharge circuit having a smaller value of capacitance is preferably employed for an electrical discharge machining equipment which is employed for a precise machining or a finishing machining.

Since a coaxial cable is inevitably involved with a considerable value of stray capacitance, however, employment of a coaxial cable is not preferable for a finishing machining conducted with an electrical discharge machining equipment. In other words, the above described two independent requirements are contradictory or antinomical from each other.

Due to the above limitation, a wire electrode type electrical discharge machining equipment which is desirably employed both for a rough or preliminary machining and for a precise or finishing machining, is preferably required to be equipped with "a rough-machining-circuit" having an electric power supply circuit of a coaxial cable or the like and with "a finishing-machining-circuit" having an electric power supply circuit of an ordinary cable having a small value of capacitance, for the purpose to allow either of them to be selectively employed, corresponding to the nature of the machining to be conducted.

In the prior art, however, no electric power feeder is available which readily allows selection of the above described two independent electric power supply circuits each of which is entirely different from each other in the polarity/value of impedance. For example, an electric power feeder having "a circuit-selective-means" consisting of an electromagnetic contactor could be supposed. However, it is naturally involved with the following drawbacks. The first drawback is that an electromagnetic contactor has a large value of inductance, resultantly causing it to be unqualified for the rough machining. The second drawback is that an electromagnetic contactor has an electromagnetic coil, resultantly reducing the reliability of the electrical power supply circuit which is employed for an electrical discharge machining equipment which employs water as a machining liquid.

An object of this invention is to provide an electric power feeder for a wire electrode type electrical discharge machining equipment, the electric power feeder being connected with at least two independent circuits, the impedance of each of which is different from one another, the at least two independent circuits being selectively employed for a rough or preliminary machining, for a precise or finishing machining, or for any other purpose, for the ultimate purpose to realise optimum machining characteristics for each of the rough or preliminary machining, for the precise or finishing machining and for any other machining mode.

JP-A-60141432 discloses a wire electrode type electric discharge machine comprising a wire electrode guide; a wire electrode, which is guided along a path, in use, by the wire guide; and an electric power feeder provided with two electric power supply circuits of different character, which are alternatively coupled to the wire electrode via contact bodies, which contact the wire electrode, for rough and finish machining, respectively. Such a machine is hereinafter referred to as of the kind described.

According to a first aspect of the invention, a machine of the kind described is characterised in that one of the circuits, for rough machining, has a higher capacitance but a lower inductance than the other of the circuits, for finish machining; in that the contact body of a first of the circuits is stationary and engaged by the wire electrode when the contact body of the second circuit is retracted; and by means for moving the contact body of the second circuit transversely of the path between the retracted position in which it is clear of the wire electrode and an advanced position in which it contacts, and deflects the path of, the wire electrode out of contact with the stationary contact body.

The means for moving the contact body may take a wide variety of forms, such as a pneumatic or hydraulic cylinder type shifter, an electromagnetic or electric motor driven shifter, or a bellows or rubber bag type shifter.

According to a second aspect of the invention, a machine of the kind described is characterised in that one of the circuits, for rough machining, has a higher capacitance but a lower inductance than the other of the circuits, for finish machining; in that the contact bodies are stationary and positioned on opposite sides of the path of the wire electrode; and by means for deflecting the path of the wire electrode transversely of the path between two positions, in one of which the wire electrode is in contact with one of the contact bodies and out of contact with the other contact bodies and vice versa.

The deflecting means may take a wide variety of form, such as a pneumatic or hydraulic cylinder type shifter, an electromagnetic or electric motor driven shifter, or a bellows or rubber bag type shifter.

Needless to emphasise, in the case of either aspect of the invention the contact bodies must be insulated from each other.

In the accompanying drawings:

Fig. 1 is a schematic drawing of a wire electrode type electrical discharge machining equipment wherein the electric power feeder for a wire electrode type electrical discharge machining equipment in accordance with the first embodiment of this invention is employed;

Fig. 2 is a cross-sectional view of an electric power feeder for a wire electrode type electrical discharge machining equipment in accordance with the first embodiment of this invention;

Fig. 3 is a schematic drawing of a wire electrode type electrical discharge machining equipment wherein the electric power feeder for a wire electrode type electrical discharge machining equipment in accordance with the second embodiment of this invention is employed, and

Fig. 4 is a cross-sectional view of an electric power feeder for a wire electrode type electrical discharge machining equipment in accordance with the second embodiment of this invention.

## FIRST EMBODIMENT

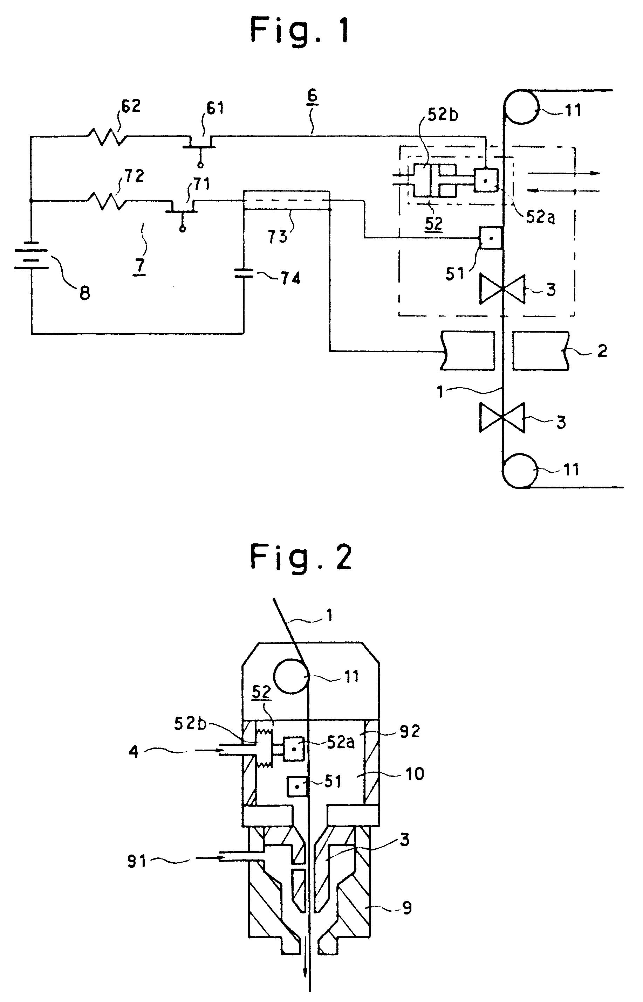

Referring to Fig. 1, a wire electrode 1 which is guided by the upper and lower wire electrode guides 3, extends with tension given by a tension applying means (not shown), the wire electrode 1 penetrating a work 2 and further being guided by a pair of guide rolls 11. A first electric power supply means 51 is unmovable in this embodiment. A second electric power supply means 52 which is a combination of a main body 52a and a drive or shifter 52b, is movable in this embodiment, from side to side in the drawing. A second electric power supply means 52 is illustrated by surrounding with a two-dotted chain line.

As was described above, a wide selection is allowed for the drive or the shifter 52b of the second electric power supply means 52. In other words, any drive or shifter selected from the group including a pneumatic or hydraulic cylinder type shifter, an electromagnetic or electric motor driven shifter, a bellows or rubber bag type shifter can be employed for this purpose. However, the last one or a bellows or rubber bag type shifter is the most convenient from the practical viewpoints.

As electric power feeder for a wire electrode type electrical discharge machining equipment in accordance with the first embodiment of this invention is a combination of a wire electrode guide 3, a first electric power supply means 51 and a second electric power supply means 52, as is illustrated by being surrounded with a one-dotted chain line.

Each of the first electric power supply means 51 and the second electric power supply means 52 is connected with either an electric power supply circuit 6 or an electric power supply circuit 7. In this embodiment, the electric power supply circuit 6 includes an ordinary cable having a small value of capacitance and is employed for a finishing machining. The electric power supply circuit 7 includes a coaxial cable having a small value of inductance and is employed for a rough machining. Each of the electric power supply circuits 6 and 7 is a series circuit of a switching element 61 or 71 and a resistor 62 or 72, and both electric power supply circuits 6 and 7 are connected with one terminal of a DC power supply 8, of which the other terminal is connected with a work 2 through a capacitor 74 and the external sheath of the coaxial cable 73.

The wire electrode type electrical discharge machining equipment having the above described electric power feeder becomes a power supply circuit suitable for a finishing machining, whenever, the wire electode 1 is removed from the first electic power supply means 51 which is connected with the electric power supply circuit 7 for the rough machining and contacted with the second electric power supply means 52 which is connected with the electric power supply circuit 6 for the finishing machining, such selective removal and/or contact being realized by employing the drive or shifter 52b to move the main body 52a of the second electric power supply means 52 to the right in the drawing. On the other hand, the wire electrode type electrical discharge machining equipment having the above described electric power feeder becomes a power supply circuit suitable for a rough machining, whenever the wire electrode 1 is removed from the second electric power supply means 52 which is connected with the electric power supply circuit 6 for the finishing machining and contacted with the first electrtic power supply means 51 which is connected with the electric power supply circuit 7 for the rough machining, such selective removal and/or contact being realized by employing the drive or shifter 52b to move the main body 52a of the second electric power supply means 52 to the left in the drawing.

The aforementioned description has clarified that since a move of the second electric power supply means 52 from side to side causes a slight change in the direction of the wire electrode 1, resultantly allowing the wire electrode 1 to selectively contact with either the first or second electric power supply means 51 or 52, thereby allowing a wire electrode type electrical discharge machining equipment provided with plural electric power supply circuits, each of which has the impedance which is different from each other, to be selectively connected with either "the finishing-machining-circuit" 6 or " the rough-machining-citrcuit" 7, corresponding of the machining requirement, either a finishing machining or a rough machinining, to realize the optimum machining characteristics both for the rough machining and for the finishing machining. Further, since the aforementioned structure can be readily employed in a wet environment, the reliability is also sizably improved for the electric power feeder in accordance with the first embodiment of this invention.

Referring to Fig. 2, a more detailed description will be presented below for the structure of the electric power feeder for a wire electrode type electrical discharge machining equipment in accordance with the first embodiment of this invention.

Referrring to the drawing, the wire electrode 1 is guided by the wire electrode guide 3 and the guide roll 11, and the first electric power supply means 51 and the second electric power supply means 52 are arranged along the wire electrode 1. The second electric power supply means 52 consists of the main body 52a and the drive or shifter 52b, and the main body 52a is moved from side to side in the drawing by the drive or shifter 52b.

The drive or shifter 52b illustrated in the drawing is the bellows or rubber bag type shifter which is inflated by being supplied with the air and deflated by being purged the air.

A nozzle 9 is arranged to surround the wire electrode guide 3, and a machining liquid which is supplied through a machining liquid supply tube 91, is gushed in the machining area. The first electric power supply means 51 which is arranged on an insulator plate 10 which is insulated from the second electric power supply means 52 (including the main body 52a and the drive 52b) which also is insulated from a machining liquid storage 92.

## SECOND EMBODIMENT

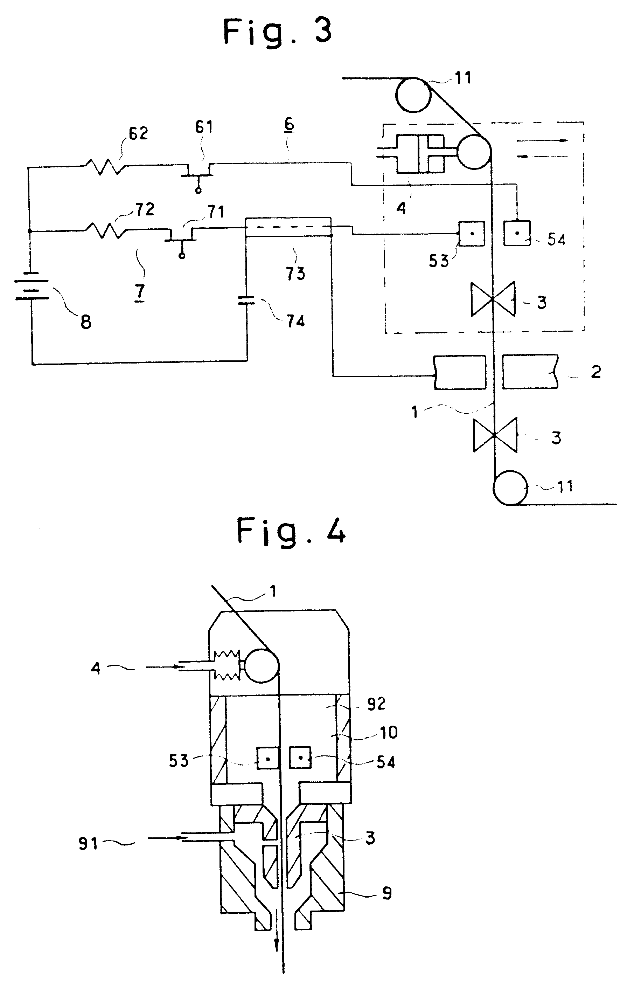

Referring to Fig. 3, a wire electrode 1 which is guided by the upper and lower wire electrode guides 3, extends with tension given by a tension applying means (not shown), the wire electrode 1 penetrating a work 2 and further being guided by a pair of guide rolls 11. A third electric power supply means 53 and a fourth electric power supply means 54 are arranged face to face, remaining a small distance therebetween in which the wire electrode 1 for electric discharge machining, is a lowed to pass. A wire elecrode shifting means 4 moves from side to side in the drawing, resultantly allowing the wire electrode 1 to contact either with the third electric power supply means 53 or with the fourth electric power supply means 54.

As was described above, a wide selection is allowed for the structure of the wire electrode stifting means 4. In other words, any drive or shifter selected from the group including a pneumatic or hydraulic cylinder type shifter, an electromagnetic or eletric motor driven shifter, a bellows or rubber bag type shifter et al. can be employed for this purpose.

An electric power feeder for a wire electrode type electrical discharge machining equipment in accordance with the second embodiment of this invention is a combination of a wire electrode guide 3, a third electric power supply means 53 and a fourth electric power supply means 54, as is illustrated by being surrounded with a one-dotted chain line.

Each of the third electric power supply means 53 and the fourth electric power supply means 54 is connected with either an electric power supply circuit 6 or an electric power supply circuit 7. In this embodiment, the electric power supply circuit 6 includes an ordinary cable having a small value of capacitance and is employed for a finishing machining. The electric power supply circuit 7 includes, e.g.; a coaxial cable 73 having a small value of inductance and is employed for a rough machining. Each of the electric power supply circuits 6 and 7 is a series circuit of a switching element 61 or 71 and a resistor 62 or 72, and both electric power supply circuits 6 and 7 are connected with one terminal of a DC power supply 8, of which the other terminal is connected with a work 2 through a capacitor 74 and the external sheath of the coaxial cable 73.

The wire electrode type electrical discharge machining equipment having the above described electric power feeder becomes a power supply circuit selectively either for a finishing machining or for a rough machining, whenever the wire electrode thifting means 4 is operated to allow the wire electrode 1 to contact either with the third electric power supply means 53 or with the fourth electric power supply means 54.

In the similar manner as was described for the first embodiment, the aforementioned description has clarified that since a move of the pass of the wire electrode 1 from side to side causes a selective contact of the wire electrode 1 with either the third electric power supply means 53 or the fourth electric power supply means 54, thereby allowing a wire electrode type electrical discharge machining equipment provided with plural electric power supply circuits, each of which has the impedance which is different from each other, to be selectively connected with either "the finishing-machining-circuit" 6 or "the rough-machining-circuit" 7, corresponding to the machining requirement, either a finishing machining or a rough machinining, to realize the optimum machining characteristics both for the rough machining and for the finishing machining. Further, since the aforementioned structure can be readily employed in a wet environment, the reliability is also sizably improved for the electric power feeder in accordance with the second embodiment of this invention.

Referring to Fig. 4, a more detailed description will be presented below for the structure of the electric power feeder for a wire electrode type electrical discharge machining in accordance with the second embodiment of this invention.

Referring to the drawing, the wire electrode 1 is guided by the wire electrode guide 3 and the guide roll 11, the third electric power supply means 53 and a fourth electric power supply means 54 are arranged face to face, remaining a small distance therebetween in which the wire electrode 1 for electric discharge machining, is allowed to pass. A wire electrode shifting means 4 moves from side to side in the drawing, resultantly allowing the wire electrode 1 to contact either with the third electric power supply means 53 or with the fourth electric power supply means 54.

In this embodiment, a wire electrode shifting means 4 which is provided with a bellows or rubber bag which is inflated by being supplied with the air and deflated by being purged the air, is presented as an example.

A nozzle 9 is arranged to surround the wire electrode guide 3, and a machining liquid which is supplied through a machining liquid supply tube 91, is gushed in the machining area. The third electric power supply means 53 which is arranged on an insulator plate 10 which is insulated from the fourth electric power supply means 54 which also is insulated from a machining liquid storage 92.

## Claims

1. A wire electrode type electric discharge machine comprising a wire electrode guide (3, 11); a wire electrode (1), which is guided along a path, in use, by the wire guide; and an electric power feeder provided with two electric power supply circuits (6, 7) of different character, which are alternatively coupled to the wire electrode (1) via contact bodies (51, 52a), which contact the wire electrode, for rough and finish machining, respectively; characterised in that one (7) of the circuits, for rough machining, has a higher capacitance but a lower inductance than the other (6) of the circuits, for finish machining; in that the contact body (51) of a first of the circuits is stationary and engaged by the wire electrode when the contact body (52a) of the second circuit is retracted; and by means (52) for moving the contact body (52a) of the second circuit transversely of the path between the retracted position in which it is clear of the wire electrode and an advanced position in which it contacts, and deflects the path of, the wire electrode out of contact with the stationary contact body.

2. A wire electrode type electric discharge machine comprising a wire electrode guide (3, 11); a wire electrode (1), which is guided along a path, in use, by the wire guide; and an electric power feeder provided with two electric power supply circuits (6, 7) of different character, which are alternatively coupled to the wire electrode (1) via contact bodies (53, 54,), which contact the wire electrode, for rough and finish machining, respectively; characterised in that one (7) of the circuits, for rough machining, has a higher capacitance but a lower inductance than the other (6) of the circuits, for finish machining; in that the contact bodies (53, 54) are stationary and positioned on opposite sides of the path of the wire electrode (1); and by means (4) for deflecting the path of the wire electrode transversely of the path between two positions, in one of which the wire electrode is in contact with one of the contact bodies (53) and out of contact with the other contact bodies (54) and vice versa.

## Patentansprüche

1. Schneiddrahtfunkenerasionsmaschine, umfassend eine Drahtelektradenführung (3, 11); eine Drahtelektrade (1), die bei Gebrauch durch die Drahtführung entlang einer Bahn geführt ist; und eine elektrische Stromzuführung mit zwei unterschiedlichen elektrischen Stromversorgungskreisen (6, 7), die wechselweise über die Drahtelektrode berührende Kantaktkörper (51, 52a), an diese für Grab- bzw. Endbearbeitung angeschlossen sind, **dadurch gekennzeichnet**, daß einer (7) der Kreise, der für Grabbearbeitung bestimmt ist, eine höhere Kapazität, jedoch eine geringere Induktion aufweist als der andere (6) für Feinbearbeitung bestimmte der Kreise; daß der Kontaktkörper (51) eines ersten der Kreise stationär ist und an der Drahtelektrode anliegt, wenn der Kontaktkörper des anderen Kreises zurückgezagen ist; und daß Mittel (52) vargesehen sind, um den Kontaktkörper (52a) des zweiten Kreises quer zur Bahn zwischen einer zurückgezogenen Stellung, in welcher er von der Drahtelektrode frei ist und einer vorgeschobenen Position, in welcher er die Drahtelektrode berüht und ihre Bahn außer Kantakt mit dem stationären Kontaktkörper ablenkt (bringt).

2. Schneiddrahtfunkenerosionsmaschine, umfassend eine Drahtelektrodenführung (3, 11); eine Drahtelektrode (1), die bei Gebrauch durch die Drahtführung entlang einer Bahn geführt ist; und eine elektrische Stromzuführung mit zwei unterschiedlichen elektrischen Stromversorgungskreisen (6, 7), die wechselweise über die Drahtelektrode berührende Kantaktkörper (51, 52a), an diese für Grab- bzw. Endbearbeitung angeschlossen sind, **dadurch gekennzeichnet**, daß einer (7) der Kreise, der für Grabbearbeitung bestimmt ist, eine höhere Kapazität, jedoch eine geringere Induktion aufweist als der andere (6) für Feinbearbeitung bestimmte der Kreise; daß die Kantaktkörper (53, 54) stationär sind und an entgegengesetzten Seiten der Bahn der Drahtelektrode (1) angeordnet sind; und daß Mittel (4) vargesehen sind, um die Bahn der Drahtelektrode quer zur Bahn zwischen zwei Stellungen abzulenken, in einer von denen die Drahtelektrode einen (53) der Kontaktkörper berührt und außer Kantakt mit dem anderen Kontaktkörper (54) ist und umgekehrt.

## Revendications

1. Machine d'usinage par étincelage du type à électrode en fil métallique, comportant un guide (3,11) de l'électrode en fil métallique; une électrode en fil métallique (1) qui, en service, est guidée le long d'un chemin par le guide du fil métallique; et un dispositif d'alimentation en énergie électrique comprenant deux circuits (6,7) d'alimentation en énergie électrique de caractère différent, qui sont alternativement couplés à l'électrode en fil métallique (1) par l'intermédiaire d'organes de contact (51,52a) qui viennent en contact avec l'électrode en fil métallique pour l'usinage d'ébauche et de finition, respectivement ; caractérisée par le fait que l'un (7) des circuits, pour l'usinage d'ébauche, a une capacité supérieure, mais une inductance inférieure à celle de l'autre (6) des circuits, pour usinage de finition; par le fait que l'organe de contact (51) d'un premier des circuits est fixe et en contact avec l'électrode en fil métallique lorsque l'organe de contact (52a) du second circuit est rétracté ; et par des moyens (52) pour déplacer l'organe de contact (52) du second circuit transversalement par rapport au chemin, entre la position en rétraction, dans laquelle il est dégagé d'avec l'électrode en fil métallique, et une position avancée dans laquelle il est en contact avec l'électrode en fil métallique et infléchit le chemin de cette électrode pour la mettre hors de contact d'avec l'organe de contact fixe.

2. Machine d'usinage par étincelage du type à électrode en fil métallique, comportant un guide (3,11) de l'électrode en fil métallique; une électrode en fil métallique (1) qui, en service, est guidée le long d'un chemin par le guide du fil métallique; et un dispositif d'alimentation en énergie électrique comprenant deux circuits (6,7) d'alimentation en énergie électrique de caractère différent, qui sont alternativement couplés à l'électrode en fil métallique (1) par l'intermédiaire d'organes de contact (53,54) qui viennent en contact avec l'électrode en fil métallique pour l'usinage d'ébauche et de finition, respectivement ; caractérisée par le fait que l'un (7) des circuits, pour l'usinage d'ébauche, a une capacité supérieure, mais une inductance inférieure à celle de l'autre (6) des circuits, pour usinage de finition;par le fait que les organes de contact (53,54)sont fixes et placés sur des côtés opposés du chemin de l'électrode en fil métallique (1) ; et par des moyens (4) pour infléchir, transversalement par rapport au chemin, le chemin de l'électrode en fil métallique entre deux positions, dans l'une desquelles l'électrode en fil métallique est en contact avec l'un des organes de contact (53) et hors de contact d'avec l'autre des organes de contact (54) et vice versa .

# Fig. 1

# Fig. 2

# Fig. 3

# Fig. 4